# EUROPEAN PATENT SPECIFICATION

(11) **EP 2 591 537 B1**
(45) Date of publication and mention of the grant of the patent: **02.07.2014**
(21) Application number: 11743874.7
(22) Date of filing: 07.07.2011
(51) Int. Cl.: H02K 1/24, H02K 19/10, H02K 1/27

(54) **LAMINATED ROTOR FOR ROTATING ELECTRIC MACHINE**
GEBLECHTER ROTOR FÜR EINE ROTIERENDE ELEKTRISCHE MASCHINE
ROTOR FEUILLETÉ POUR MACHINE ÉLECTRIQUE TOURNANTE

(30) Priority: 09.07.2010 EP 10169115; 09.07.2010 US 363199 P
(43) Date of publication of application: 15.05.2013
(73) Proprietor: BRUSA Elektronik AG, 9466 Sennwald (CH)
(72) Inventor: HOLZNER, Andreas, 83334 Inzell (DE); MATHOY, Arno, CH-9472 Grabs (CH)
(74) Representative: Patentbüro Paul Rosenich AG
(86) International application number: PCT/IB2011/053024
(87) International publication number: WO 2012/004761

(56) References cited:
- EP-A1- 1 703 080
- DE-A1- 10 253 950
- DE-A1-102007 040 750

## Description

The present invention relates to a laminated rotor for rotating electric machine, in particular for a hybrid synchronous motor of vehicle drives, the rotor plates of which have one or several recesses as flux barrier or magnet pocket, which comprise radially innermost and outermost edge sections as rounded transition regions from and to edge sections lying therebetween, wherein at least one of these transition regions is configured in an ellipse shape, according to the preamble of claims 1 and 7. The invention relates to a special configuration of the geometry of rotor plates in electric motors, in particular for the drive of an electric car.

An electric machine is known from WO-0148890-A1, in which the stator or the rotor has radial tooth modules/poles which are separated from each other. In order to increase the reluctance, each tooth module/pole is provided with a reluctance barrier which is constructed as a radial and axially extended gap in the pole shoe.

As is known, the electric motors in the main drive of electric cars or hybrid cars often operate up to rotation speeds of approximately 12000 rpm. These high rotation speeds bring about very great centrifugal forces on the periphery. By way of example, reference is to be made to current-excited synchronous motors (CSM). Originally, such current-excited synchronous motors or generators were used for large motors or generating plants, where the rotation speeds are a fraction of the above-mentioned value. The current-excited synchronous motor differs from the other types of motor used hitherto in an electric car (e.g. asynchronous and permanent magnet synchronous motors) substantially by a wound and current-excited rotor.

Owing to the very high centrifugal forces which act on the pole caps and are produced not least by the weight of the copper windings, in the new application for electric cars the poles/pole shoes or plate stacks of the rotor in the CSM are particularly highly stressed. Owing to the high centrifugal forces, which are produced inter alia, by the winding and act with leverage force on the pole caps, high notch stresses occur in the region of slots acting as a flux barrier, namely at the geometric transitions from the horizontal into the vertical. Also with the configuration of conventional roundings (circular in shape), enormous stress peaks also occur, and namely at the transitions from the circular rounding to the straight line. Nowadays, these stress peaks restrict the possibility for further development of the rotor geometry in a CSM or prevent high rotation speeds. Conventional methods, such as for example the application of Kevlar cages, welded or screw constructions or suchlike which are intended to increase the stability of the rotor, however, have a performance-reducing effect. Similar effects also occur, however, in known hybrid synchronous motors (HSM) for the main drive in the automobile field, in which recesses are provided for buried magnets and/or punched-out flux barriers.

Another problem in the rotor geometry of the conventional current-excited synchronous machines lies in that the plate stacks of the rotor likewise under the rotation speed-induced centrifugal forces with identical dimensioning lift themselves earlier from the shaft than in comparable electric motors with closed rotor plate stacks. The effect of the lifting from the shaft therefore likewise limits the possible rotation speed. The lifting effect is less in machines with a closed pole structure (e.g. HSM), but it is also considerable.

Therefore, an improved lifting behaviour, i.e. less easy releasing of the plate stack from the shaft, is also desirable. The lifting behaviour of the rotor plates could theoretically be influenced by a greater interference fit between shaft and rotor plate. However, the stress on the plate geometry would be additionally increased in the region of the radial slits, which is not desirable for the reasons previously mentioned. Therefore, the effects of lifting and notch stresses or respectively increased contact pressure between rotor plate stack and shaft, and increased notch stress play against each other in a disadvantageous manner.

It could be defined as a superordinate objective, to find a rotor structure which has no centrifugal force-induced problems at high rotation speeds (e.g. approximately 12000 rpm).

US-2007096578-A1 discloses a rotor for electric machines. However, this solution deals expressly only with the edge paths of the recesses of the rotor plate immediately adjoined by the outer rotor periphery, wherein exclusively the curved end part of the recess is configured circularly or, if applicable, elliptically.

None of the two indicated known technologies satisfactorily solves the problem which is posed.

According to US-2010045121-A1, a cobalt alloy was used for the magnet circuits, to increase the magnetic saturation in electric motor construction.

A rotor construction as defined in the preamble of claim 1 is disclosed in DE 10253950 A1. To provide a permanent-magnet synchronous machine whose maximum rotational speed can be enhanced without degrading the synchronous machine characteristics thereof, cross-pieces are proposed between adjacent recesses lying obliquely to the pole axis. Although such a construction has a positive influence on the safety and the lifespan but leads to severe problems when a high rotational speed has to be reached, because the maximum rotational speed decreases rapidly with increasing angle of the cross piece to the pole axis. The focus in the DE 10253950 A1 lies on the reduction of local tear forces that influence the product lifespan. Only adapting the angle of the cross pieces for reducing the forces leads to a decrease in burst speed.

The invention is based on solving the problem of creating an improved rotor geometry, by which the above-mentioned disadvantages of the prior art are reduced or eliminated, i.e. by which on the one hand the stress peaks, in particular the notch stresses in the rotor - despite high centrifugal forces - can be significantly reduced. On the other hand, through the invention also the lifespan and the torque of the rotor or of the electric motor are to be increased, and therefore also the lifting behaviour is to be positively influenced, or reduced.

The problem which is posed is solved by the features of the independent claims 1 and 7. Advantageous further developments of the solution according to the invention are indicated in the dependent claims.

According to the basic ideas of the present invention each of the rounded transition regions of the recesses is shaped according to a part of the perimeter of an ellipse and a cross-piece is provided between adjacent recesses, the centre line of all cross-pieces lying obliquely to a pole axis. This combination of elliptically shaped transitions in the recesses leads to a significant increase in product lifespan with additional safety. That can be transformed into an increase in burst speed by reduction of the angle of the cross pieces. Only with the claimed combination of oblique cross pieces and the shape of the elliptically rounded transition regions of the recesses in the rotor according to a part of the perimeter of an ellipse, the disadvantage of the DE 10253950 A1 can be overcome.

To solve the problem which is posed, one proceeds from a laminated rotor for rotating electric machines, in particular for a hybrid synchronous motor of vehicle drives, the rotor plates of which have one or several recesses as flux barrier or magnet pocket. The radially innermost and outermost edge sections of these recesses (rounded transition regions) comprise edge sections lying therebetween, wherein at least one of these transition regions is configured in ellipse shape. On the other hand between the adjacent recesses in each case an oblique cross-piece is provided. The centre line of these cross-pieces can lie obliquely to a pole axis, with the angle to the pole axis being preferably approximately 20° - 50°, in particular 30°.

According to a preferred embodiment, a first group of the recesses is configured, with respect to the diameter, as approximately radial slits, and another group of the recesses, is configured as tangential slits, provided with a permanent magnet. Preferably, the main axis of the ellipse is oriented essentially radially, at least in the tangential slits, preferably parallel to the center line of the cross-piece, most preferably also for the radially inner edges of the approximately radial slits.

The main axis of the ellipse is preferably oriented essentially tangentially for the radially outer edges of the approximately radial slits. Further preferred is an embodiment with the radially outer edge of the first group of recesses for an increased deflecting or respectively a concentration of magnetic flux lines in radial direction being shaped with a ham- or kidney-like contour.

The laminated rotor according to the second alternative is characterized in that the recesses in the rotor poles are configured as radial slits, wherein the inner edges of the recesses are shaped according to a part of the perimeter of an ellipse oriented tangentially and symmetrically to the centre line of the recesses, and that between two adjacent parts of the radial slits a bridge is provided. Again the inner edges of the recesses are shaped according to a part of the perimeter of an ellipse and are combined with solid material between adjacent recesses. Said recesses are now provided in the form of radial slits now, and the solid material, corresponding to the cross-pieces, are now in the form of a bridge between the radial slits. It is only the this combination of the elliptical shape of the inner edges of the recesses with the stabilizing bridges in the radial slits that can solve the object of the invention and results in a rotor geometry combining the ability for high rotational speed and though increased lifespan and decreased mechanical stress.

In an example version of a CSM, the radial slot is divided - in its longitudinal axis - by a transversely arranged bridge into two or several regions, wherein the radially inner first slit part is configured as a first flux barrier, if applicable to receive a permanent magnet, and the radially outer second slit part is configured as a second flux barrier, if applicable also to receive a permanent magnet. Through the permanent magnet, the rotor iron of the rotor plates - at the bridges or respectively at the remaining connection sites - is saturated, so that these regions for the magnetic flux act as a division of the pole. Thereby, the effect of the magnetic field lines can be optimized in the rotor pole.

In a preferred embodiment the main axis of the tangential ellipse is greater by 40 to 60% than the width of the radial slit, and the secondary axis of the ellipse is smaller by 70 to 80% than the width of the slit.

The radially inner first slit part is provided with a permanent magnet. According to a further embodiment, the radially outer second slit part can be provided with a permanent magnet, too.

Preferably, at least the radially inner end of both slit parts is configured elliptically. Additionally the radially outer end of at least the first slit part is also configured elliptically.

According to a further embodiment of the second variant of the invention, an outermost point of the radial slit is arranged with a radial distance from the outer shell of the rotor pole, the value of which preferably lies between 0.6-0.7 mm (in order to bear the 12000 rpm with this rotor size).

In all recesses and contour sections of the rotor plate, the curves of second order are configured elliptically in each transition region.

For any of the embodiment of the preceding paragraphs, the rotor plates can advantageously be produced from an iron-cobalt alloy, preferably with a proportion of 50% cobalt and 50% iron, alternatively to iron-silicon rotor plates. By this measure, the torque e.g. of a HSM can therefore be further increased and hence the power density can be increased significantly.

The rotor plate geometry according to the present invention is suitable in particular for a fast-running HSM or CSM. In the CSM, the rotor comprises at least two rotor poles, each with an exciter winding and in each rotor pole at least one magnetic flux barrier in the form of a radial slit. In the HSM, per rotor pole at least one magnet is housed in a magnet pocket and the lamination also has at least one flux barrier.

Calculations [by means of the Finite Element Method (FEM)] and tests confirmed that the shape of an ellipse in the recess transition region involves the least stresses, because of the continuous alteration of the distance from the intersection of the main axis of the ellipse (what corresponds to a continuous alteration of the radius). By systematic determination of height and width, the ellipse can be optimized geometrically with respect to as minimal a notch stress as possible. As the use of two cooperating circular roundings with different radii represents a good approximation to the ellipse, thereby a distinct improvement compared to a pure circular rounding can already be achieved. Through the elliptical configuration of the transition regions of the recesses, the lifespan of the rotor is increased and the risk of fracture induced by centrifugal force is reduced.

By the configuration according to the invention, evidently an effective deflection of the flux of force takes place in the transition region or respectively a reduction of the notch effect, which does not even allow stress peaks to occur in the dangerous zone at all. By use of the ellipse shape with its continuous distance increase, this takes place in a particularly harmonious manner. (The term "distance" is to be understood in each case to mean a distance from the intersection of the main axis of the ellipse.) The condition for fulfilling the function of the continuous distance increase could also be designated as "distance gradient". This continuous distance increase as a condition could, however, in addition to the ellipse, also be fulfilled by two radii continuing tangentially into each other, with a different value.

The present invention is therefore basically to be used advantageously in all electric motors with radial slits, magnet pockets and/or other recesses, in which notch stresses occur. In this respect, the invention is not restricted to CSM or HSM, but rather it can be used expediently in any rotor geometry having recesses.

In exemplary versions, there is a rotor piece having at least one salient pole that has a shank, said shank having a radial shank axis, and said at least one salient pole having a shoe. There is a radially-extending longitudinal slot in said at least one salient pole, said radially-extending longitudinal slot having a central slot axis coincident with said shank axis, said radially-extending longitudinal slot having first and a second lateral side surfaces, the distance between said first and second lateral side surfaces defining a slot width. Furthermore, there is a radially-outermost edge section of said radially-extending longitudinal slot, said radially-outermost edge section located at a radially outer end of said radially-extending longitudinal slot. This radially-outermost edge section includes a curved outermost transition region having profile shape at least approximately in form of a curve of second order. A radially-innermost edge section of said radially-extending longitudinal slot is located at a radially inner end of said radially-extending longitudinal slot. This radially-innermost edge section includes a curved innermost transition region having profile shape at least approximately in form of a curve of second order.

A bridge spanning the slot width and connected to said first and said second lateral side surfaces divides said radially-extending longitudinal slot into a first radially-inner slot portion and a second radially-outer slot portion; said first slot portion having a respective curved outer transition region having profile shape at least approximately in form of a curve of second order. The second slot portion has a respective curved inner transition region having profile shape at least at least approximately in form of a curve of second order, and a permanent magnet is in said first slot portion. This permanent magnet generates flux saturating said bridge to create high resistance for further magnetic flux in said bridge and to reduce magnetic conductivity of said bridge, so as to extend the effect of said magnetic flux barrier to a total region of a longitudinal axis of said at least one salient pole. The second radially-outer slot portion is preferably an empty (vacant) space flux barrier, or may have a second permanent magnet therein.

In yet additional exemplary versions of the invention, there is a rotor piece having at least one salient pole that has a shank, said shank having a radial shank axis, and said at least one salient pole having a shoe. A radially-extending longitudinal slot in said at least one salient pole has a central slot axis coincident with said shank axis. This radially-extending longitudinal slot has first and second lateral side surfaces, the distance between said first and second lateral side surfaces defining a slot width. A radially-outermost edge section of said radially-extending longitudinal slot is located at a radially outer end of said radially-extending longitudinal slot, and said radially-outermost edge section includes a curved outermost transition region having profile shape at least approximately in form of a curve of second order. Furthermore, a radially-innermost edge section of said radially-extending longitudinal slot is located at a radially inner end of said radially-extending longitudinal slot.

This radially-innermost edge section includes a curved innermost transition region having profile shape at least approximating an ellipse perimeter formed by an ellipse having major diameter of length greater than said slot width by a range of 40-60% and having minor diameter length smaller by a range of 70-80% than said slot width. There is a bridge spanning the slot width and connected to said first and said second lateral side surfaces, this bridge dividing said radially-extending longitudinal slot into a first radially-inner slot portion and a second radially-outer slot portion. A permanent magnet is located in said first slot portion. It is further advantageous if permanent magnet generates flux saturating said bridge to create high resistance for further magnetic flux in said bridge and reduce magnetic conductivity of said bridge so as to extend the effect of said magnetic flux barrier to a total region of a longitudinal axis of said at least one salient pole. In turn, the second radially-outer slot portion is either preferably an empty-space flux barrier, or may have a second permanent magnet therein. In variations of these additional preferred exemplary versions of the invention, it may be additionally advantageous configure said curved outermost transition region's profile shape to consist of an elliptical profile. Or, to configure said first slot portion to have a respective curved outer transition region having profile shape at least approximating a respective ellipse perimeter formed by a respective ellipse having a respective major diameter of length greater than said slot width by a range of 40-60% and having a respective minor diameter length smaller by a range of 70-80% than said slot width. Or, to configure said second slot portion to have a respective curved inner transition region having profile shape at least approximating a respective ellipse perimeter formed by a respective ellipse having a respective major diameter of length greater than said slot width by a range of 40-60% and having a respective minor diameter length smaller by a range of 70-80% than said slot width. In additional variations, it may be afford advantage to configure the respective minor diameter of said respective ellipse perimeter of said curved outer transition region of said first slot portion to be smaller than said minor diameter of said curved innermost transition region's ellipse perimeter, or additionally, to configure said respective minor diameter of said respective ellipse perimeter of said curved inner transition region of said second slot portion to be smaller than said minor diameter of said curved innermost transition region's ellipse perimeter.

This arrangement may be stated alternatively by indicating that said radially-outermost edge section of said radially-extending longitudinal slot has a radially-maximal extent spaced in the range of 0.6 - 0.7 mm from an outer periphery of said at least one salient pole. Further according to the invention, therefore in each case an oblique cross-piece is provided between adjacent recesses (e.g. between magnet pockets and flux barriers). Thereby, the cross-pieces with the greatest stresses are stressed more strongly to tension and less to bending. This results in a reduced notch stress, whereby the risk of fracture of the cross-pieces is significantly reduced. It is additionally expedient if the oblique cross-pieces are configured to be as narrow as possible, in order to thereby at the same time make possible a magnetic saturation thereof more quickly, which in turn increases the performance of the motor, as the magnet mass which is used can be utilized more effectively.

Thus, in further developments, the invention may advantageously include a rotor piece having a central axis, and having a radial extent from said central axis. A first magnet pocket recess is disposed in said rotor piece and transversely to a radius of said rotor piece. This magnet pocket recess has a major axis coinciding with a chord segment of a rotor circle delineated by said radial extent. The magnet pocket recess has a radially-outer top wall and a radially-inner bottom wall. It also has a first end closing between said radially-outer top wall and said radially-inner bottom wall, as well as a second end closing between said radially-outer top wall and said radially-inner bottom wall. A first flux barrier recess is located proximate to said first end and is separated from said first end by a first oblique crosspiece lying obliquely at an angle in the range of 10°-50° relative to a radius of said rotor piece that passes through a center of said magnet pocket recess, said first flux barrier recess having a respective upper wall and a respective lower wall. A second flux barrier recess is located proximate to said second end and is separated from said second end by a second oblique crosspiece lying obliquely at an angle in the range of 10°-50° relative to a radius of said rotor piece that passes through a center of said magnet pocket recess. This second flux barrier recess has a respective upper wall and a respective lower wall. A pocket recess first outer transition region lies between said radially-outer top wall and said first end. A pocket recess first inner transition region lies between said radially-inner bottom wall and said first end. A pocket recess second outer transition region lies between said radially-outer top wall and said second end. A pocket recess second inner transition region lies between said radially-inner bottom wall and said second end. A first flux barrier upper transition region lies between said first flux barrier respective upper wall and said first oblique crosspiece. A first flux barrier lower transition region lies between said first flux barrier respective lower wall and said first oblique crosspiece. A second flux barrier upper transition region lies between said second flux barrier respective upper wall and said second oblique crosspiece. A second flux barrier lower transition region lies between said second flux barrier respective lower wall and said second oblique crosspiece. Each of said transition regions preferably has a respective profile shape at least approximately in a respective form of a respective curve of second order. As a variation, each transition region's profile shape may include a respective profile shape selected from the group consisting of an elliptical profile, a parabolic profile, and a higher-order polynomial profile; or, each transition region's profile shape is a respective elliptical profile. Within these developments of the invention as well, it should again be understood, as previously referred to, that the rotor piece may advantageously be produced from an iron-cobalt alloy.

In further developments, the invention may advantageously include an outer magnet pocket recess disposed in said rotor piece and transversely to a radius of said rotor piece, this outer magnet pocket recess having a respective major axis parallel to the major axis of the first magnet pocket recess. This outer magnet pocket recess has a respective radially-outer top wall and a respective radially-inner bottom wall. It also has a respective first end closing between its respective radially-outer top wall and its respective radially-inner bottom wall, as well as a second end closing between its respective radially-outer top wall and its respective radially-inner bottom wall. A first radially outwardly lying recess is located proximate to said first end, this first radially outwardly lying recess having a ham-like or kidney-like contour. A second radially outwardly lying recess is located proximate to said second end this second radially outwardly lying recess has a ham-like or kidney-like contour. As will be readily understandable, in advantageous variations, there is: an outer magnet pocket recess first outer transition region between said outer magnet pocket recess radially-outer top wall and said outer magnet pocket recess first end; an outer magnet pocket recess first inner transition region between said outer magnet pocket recess radially-inner bottom wall and said outer magnet pocket recess first end; an outer magnet pocket recess second outer transition region between said outer magnet pocket's radially-outer top wall and said outer magnet pocket's second end; and, an outer magnet pocket recess second inner transition region between said outer magnet pocket's radially-inner bottom wall and said outer magnet pocket's second end. Each of these outer magnet pocket's transition regions may advantageously have a respective profile shape at least approximately in a respective form of a respective curve of second order. As shall be further readily understandable, in variants, each respective transition region of said outer magnet pocket's transition regions may advantageously include a respective profile shape selected from the group consisting of an elliptical profile, a parabolic profile, and a higher-order polynomial profile. Or, as a variant, each transition region's respective profile shape may be a respective elliptical profile.

A HSM (or CSM) with the rotor according to the invention of plates of a cobalt/iron alloy with flux barriers which are rounded in the notches elliptically or approximately elliptically or respectively according to a curve of second order, therefore creates a surprising improvement in power density per space or per weight, which is an important criterion in electric car construction for vehicle drives.

The invention is explained in further detail below by way of example with the aid of the enclosed drawings, which illustrate preferred example versions of the rotor geometry according to the invention of one CSM and two HSM laminations, in which are shown:
- Fig. 1 a view of a first example embodiment of the rotor geometry according to the invention;
- Fig. 2 a view of a part II in Fig. 1 on an enlarged scale;
- Fig. 3 a view of a part III in Fig. 2 on a proportionally enlarged scale;
- Fig. 4 a partial view of the second embodiment of the rotor geometry according to the invention (60° sector);
- Fig. 5 a third preferred embodiment of the rotor geometry according to the invention for a HSM; in this case with six rotor poles
- Fig. 6. a partial view VI in Fig. 5 on a proportionally enlarged scale;
- Fig. 7 a partial view VII in Fig. 6 on a proportionally enlarged scale;
- Fig. 8 a further partial view in Fig. 6 on a proportionally enlarged scale.

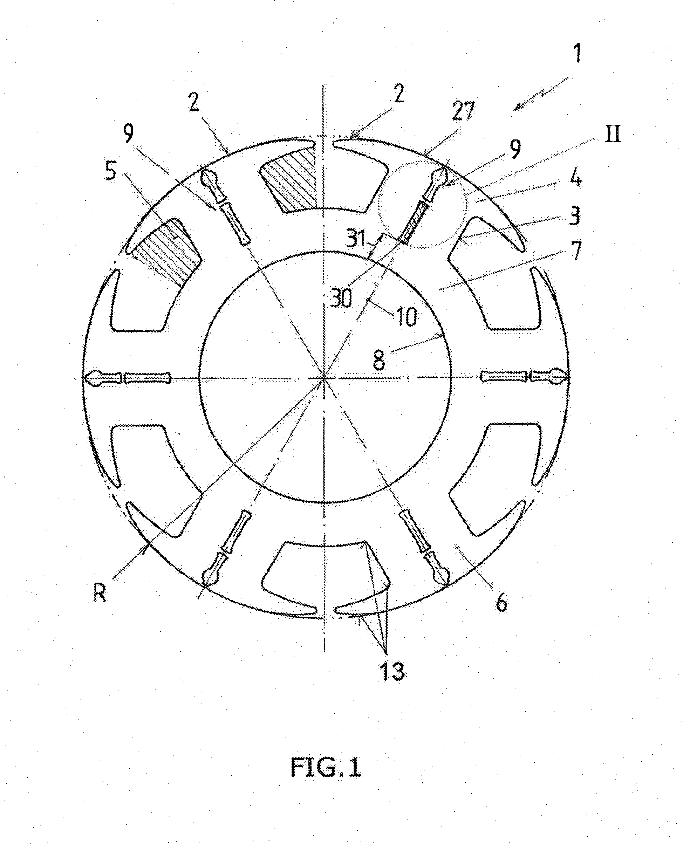

Fig. 1 shows diagrammatically the view of an example version of the rotor 1 (without rotor shaft) according to the invention, which is provided for a current-excited synchronous motor (CSM) e.g. suitable for vehicle drives. In this example version, the rotor 1 has a 6-pole embodiment, however, if applicable, 2-pole, 4-pole, 8-pole etc. rotor geometries also lie within the scope of the invention. The rotor poles are designated in Fig. 1 by 2.

The rotor 1 is illustrated in Fig. 1 as a salient pole rotor, wherein each of the rotor poles 2 has a pole shank 3 and a pole shoe 4. Each rotor pole 2 is provided in a manner known per se with an exciter winding 5, which is arranged around the pole shank 3. The cross-section of the exciter winding 5 is illustrated only diagrammatically and hatched in Fig. 1.

The rotor 1 in this case consists of a stack (bundle) of uniform rotor plates 6, which are combined in a manner known per se, e.g. glued, welded or connected by a positive fit (not illustrated).

In Fig. 1 it can be seen that the lamination changes here from a closed ring element - technically designated as hub 7 - to six rotor poles 2 connected externally thereon, which are respectively wound around with the wire (e.g. copper wire) of the exciter windings 5. A central opening of the rotor 1 to receive the rotor shaft (not illustrated) is designated by 8.

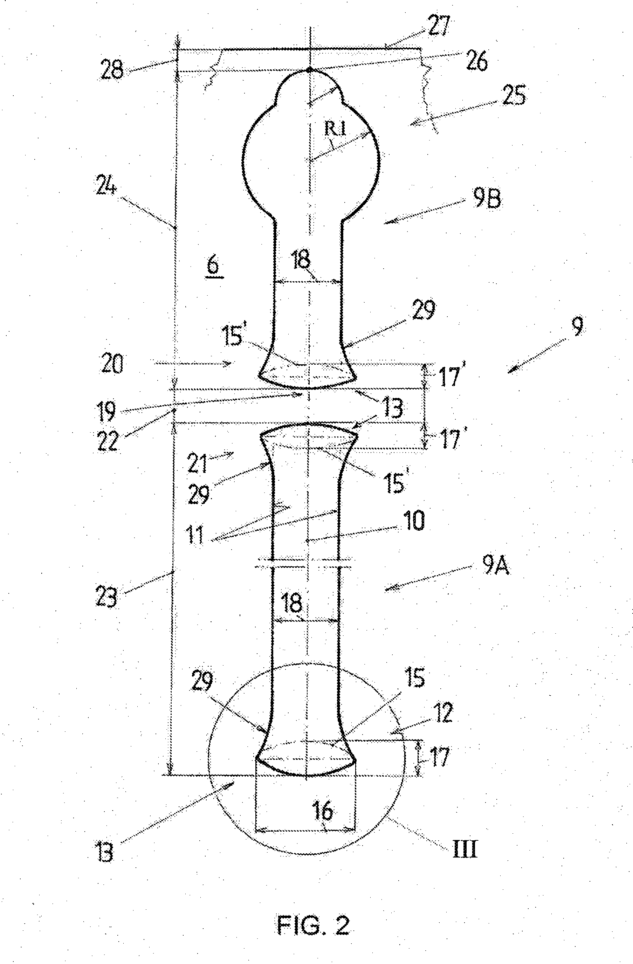

In each rotor pole 2, a radial recess acting as a flux barrier is provided, i.e. a slit 9 along a pole axis 10. The recesses or slits 9 are configured here in the rotor poles 2 as central longitudinal openings with substantially parallel edges or side faces 11 (Figures 1 and 2).

The dimensions and the relative arrangement of the slit 9 in a rotor pole, or respectively the rotor poles 2 of this example version itself are to be seen in Fig. 1 and 2. Through the present invention, a novel rotor geometry is indicated. [Substantially the construction by Arno Mathoy in DE 10 2007 040 750 A1 (magnetic constitution of the flux barrier in the CSM), (also published as US- 20100308686-A1) incorporated herein by reference in its entirety for all intents and purposes, is now also optimized mechanically].

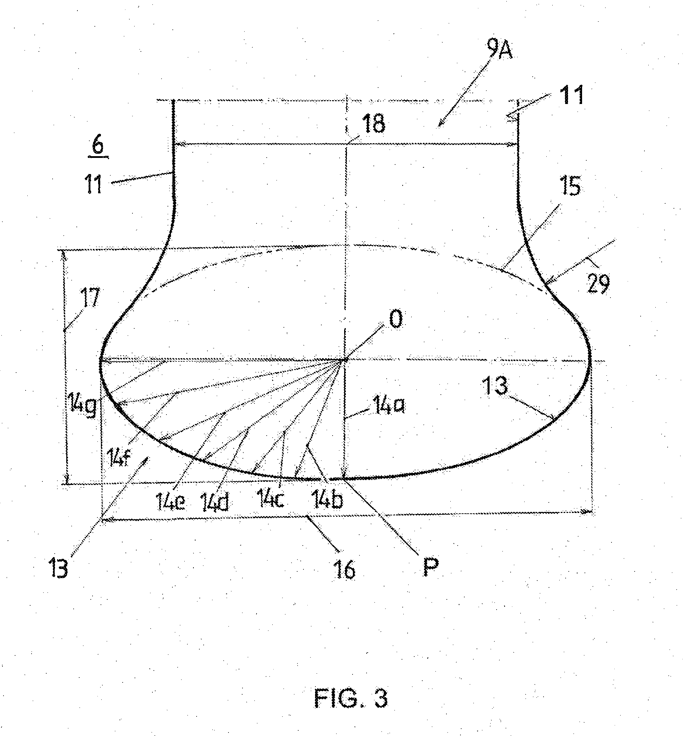

The present invention makes provision to configure the radial slit 9 in the rotor plate 6 elliptically at least at its origin, i.e. at the radially inner end 12 of the slit 9 in its transition region 13, i.e. with a continuous increase of the distances 14a...14g from an intersection O of a main axis 16 and a secondary axis 17 of an ellipse 15, in order to reduce the notch stresses - as greatly as is practically possible - in these transition regions 13 (Fig. 3). The ellipse 15 therefore lies with its main axis 16 ideally arranged tangentially to the high radial stresses, which occur both with high pressure, necessary for torque transmission at high rotation speeds, and also with high centrifugal forces, because both forces attempt to widen the rotor radially outwardly. The ellipse 15 therefore lies approximately transversely to the pole axis 10. In Fig. 3, the recess or slit part 9A has three transition regions 13: from the left-hand side face 11 (edge) over the radially deepest point P up to the right-hand side face 11 (edge).

In this version of the invention, the continuous increase of distances 14a - 14g is configured as part of the ellipse 15 (Fig. 3). The full ellipse 15 is only illustrated by dot-and-dash lines in Fig. 3. In the inner end 12 (front face) of the radial slit 9, the ellipse 15 is therefore arranged tangentially, i.e. with its main axis 16 perpendicularly to the pole axis 10 (Fig. 2).

In the illustrated example version, the main axis 16 of the ellipse 15 is preferably longer by 40-60% than the width 18 of the slit 9. The secondary axis 17 of the ellipse 15 is preferably shorter by 70-80% than the width 18 of the slit 9. In the example version according to Fig. 3, the width 18 of the slit 9 is selected at approximately 2.5 mm, the main axis 16 at approximately 3.6 mm and the secondary axis 17 of the ellipse 15 at approximately 1.4 mm.

According to the calculations and considerations carried out by the inventor, through this configuration an effective, harmonious deflection of the stresses takes place in the transition regions 13. This continuous increase in distance as a condition could, however, also be fulfilled according to the invention - as had already been mentioned above - in addition to the ellipse 15, by means of parabolae (quadratic function), hyperbolically, as polynomials of higher order or by two or more radii, continuing into each other tangentially, of circles of different diameter (approximation to the ellipse).

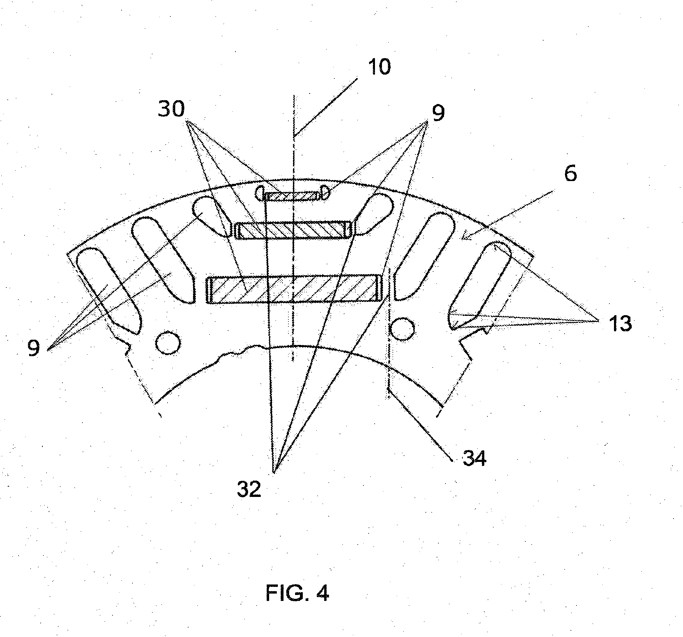

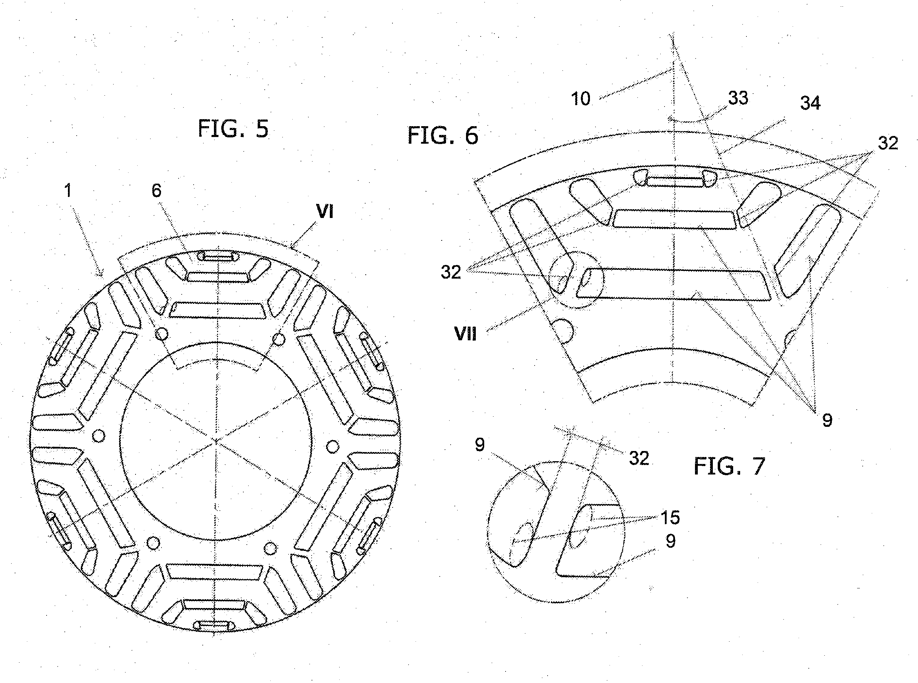

Such approximations to the ellipse can be seen e.g. in Figure 6 and namely in the radially outer roundings of the flux barriers, which according to Fig. 6 are composed of three circles in each case with different radii, while the comparable roundings according to Fig. 4 are circular or can be configured purely elliptically. It is evidently crucial that the transition does not take place angularly or in the form of a single circle (with constant radius), but rather with a continuous increase of the distances 14a...14g from the point O.

Through the configuration according to the invention according to an ellipse, a requirement of a "distance gradient" is also specified, i.e. the requirement of a continuous change of the distances 14a...14g of the individual ellipse points from the ellipse centre point O (Fig. 3).

As can be seen in Fig. 1-3, in this version the radial slit 9 - viewed in its longitudinal axis (which coincides here with the pole axis 10) - is divided into two parts by a bridge or cross-piece 19, wherein the radially inner first slit part 9A is configured to receive a permanent magnet 30 as additional flux barrier (see also Fig. 1), and the radially outer second slit part 9B as reinforced air gap-flux barrier.

Using the teaching according to the invention, preferably the following parts can be configured elliptically:
- the radially inner end 12 of the slit 9, or respectively of the first slit part 9A,
- the respectively inner end 12 or respectively 20 of both slit parts 9A and 9B,
- the radially outer end 21 of the first slit part 9A or of the slit parts 9A and 9B;
- likewise, an ellipse is also conceivable and used expediently at an outermost point 26 of the second slit part 9B.

In the preferred example version, not only these ends 12, 20, 21 of the slit parts 9A and 9B of rotor poles 2, but at all transitions of the rotor geometry of opening or respectively recesses to the full material are configured with a distance gradient, in particular elliptically, in order to further reduce the centrifugal force-induced stresses in the rotor plate.

In the version according to Fig. 2 a width of the bridge 19 was designated by 22. The value of the width 22 of the bridge 19 is selected here at approximately 1.2 mm, and a length 23 of the inner first slit part 9A at approximately 15.5 mm, and a length 24 of the radially outer second slit part 9B at approximately 12.5 mm.

The region of an outer end 25 of the second slit part 9B is widened here circularly with a radius R1 (Fig. 2), the value of which here is about 2.6 mm. The outermost point 26 of the slit part 9B is arranged from an outer shell 27 of the pole shoe 4 at a radial distance 28, the value of which in this case is approximately 0.7 mm. In this example version, the maximum rotor radius R was selected with 82 mm (Fig. 1) and the diameter of the opening 8 of the rotor 1 was selected with 85 mm.

In Fig. 2 it can also be seen that as a rounding or curve in the transition regions 13, the same ellipse 15' is used at the outer end 21 of the first slit part 9A and at the inner end 20 of the second slit part 9B, the secondary axis 17' of which, however, is smaller (only approximately 1.0 mm) than the secondary axis 17 of the ellipse 15 at the inner end 12 of the first slit part 9A. The ellipses 15' have the same main axis 16 as the ellipse 15.

In Fig. 2 and 3, the ellipses 15 or respectively 15' are connected with the side faces 11 (edges) of the slit 9 by a radius 29, the value of which was selected here at approximately 5.0 mm. In Fig. 1 a radial distance between the opening 8 and an innermost point P (see also Fig. 3) of the slit 9 was designated by 31. The distance 31 in this case has a value of 10.0mm.

The rotor geometry according to the invention opens up new possibilities for the motor designers, which are based on the following findings:

As the prior art offers no basic principles for a motor type of the current-excited synchronous motor in this structural and output size, extensive tests, calculations and modelling were carried out by the inventor for the realization of the above concepts. In the first step, the cylinder press fit between rotor shaft and plate stack of the rotor was tested. Particularly in the upper rotation speed range - 8000 to 12000 rpm - a distinct difference in operating behaviour was able to be established here - compared with plate stacks hitherto, as in the hybrid synchronous motor or in an IPM (motor excited by interior permanent magnets).

In the comparison of these two laminations - with regard to the joining pressure - a reduction of about 70% was able to be established at the maximum rotation speed. As the widening of the hub 7 with respect to the shaft - owing to the greater median diameter and the greater centrifugal force connected therewith - increases more rapidly, with an increasing rotation speed the interference fit, and hence the joining pressure, decreases. Therefore, according to the invention with the geometry of the current-excited synchronous motor an increase of the interference fit is definitively preferred, in order to thereby prevent a lifting of the rotor hub - even at high rotation speeds. This lifting must be prevented in order to ensure the torque transmission between rotor shaft and plate stack in all operating situations. For this reason here according to the invention the identical joining pressure between rotor shaft and hub is to be aimed for as in closed laminations according to the prior art known per se - similar to Fig. 4.

Based on these findings according to the invention, the geometry of the rotor plate 6 was able to be dimensioned more objectively with regard to stability according to the invention. In order to prevent a failure of the final rotor stack in operation, the necessary components were tested with regard to stresses and were successfully adapted geometrically.

The geometry of the proposed rotor plate 6 also influences very positively the lifting behaviour of the rotor 1 from the shaft. With a maximum rotation speed of 12000 rpm a minimum joining pressure of 6122 MPa and a maximum joining pressure of 14862 MPa - according to tolerance position - were measured in the prototype according to the invention for the lifting of the rotor hub from the rotor shaft by means of the rotor geometry according to the invention. The significant increase of the rotation speed lower limit for the lifting of the rotor hub from the machine shaft constitutes an original and very advantageous technical effect, which for this reason is therefore to be regarded as inventive.

The dimensioning of the lamination (by means of the Finite Element Method) takes place through an analysis on the model of the 60° segment, which was already used for the calculations of the cylinder press fit. The recess (the radial slit 9) is situated in the pole axis, which serves to increase the reluctance moment of the available torque without exciting current. This characteristic is of crucial importance for the CSM for obtaining the emergency operating characteristics (in vehicle drives) in the case of fault.

Viewed physically, this flux barrier separates from each other the two magnetic flux lines, with run in opposite directions, and prevents too great a phase shift between the current axis and the field axis. Therefore, the torque which is produced can also nevertheless be kept at the nominal torque without a current supply of the rotor winding (e.g. also in an emergency operation).

For this reason, the dimensioning of this flux barrier is accorded increased attention. Ideally, the pole should be completely separated through in the vertical axis. As this is not possible, however, for mechanical reasons, the flux barrier becomes as large as possible and the remaining mechanical connections, which are designated as "magnetic bridges", are preferably saturated magnetically by a permanent magnet or by the basically present magnetic flux. As soon as the bridges are saturated, they act as flux barriers. In this way, a complete separation of the two regions is achieved with regard to the magnetic flux.

The applicant's tests showed that without the present invention with a standard dimensioning, at 12000 rpm in the rotor plate stress peaks are reached with respect to the comparison stress according to MISES of over 870 MPa.

The parameters, influencing each other reciprocally, formed a vicious circle which is only broken by the invention. Through the invention, it becomes possible for the first time to offer CSMs in the same overall size as IPMs with at least the same performance and with an identical rotation speed range.

In the region of the flux barrier (of the radial slit 9), enormous notch stresses occurred at the geometric transitions from the horizontal into the vertical. With conventional roundings, in addition stress peaks occurred at the tangential transitions. Through the invention, and factually confirmed by variational calculus, the stresses were able to be reduced to a minimum by geometric alterations, wherein the shape of an ellipse ultimately produced the transition with the least stresses. This is evidently to be attributed to the continuous increase of the distance towards the notch.

The ellipse 15 is therefore (Figures 1-3) to be configured "recumbent", i.e. the main axis 16 perpendicular to the slit 9 or respectively tangentially at the end of the radial slit 9. By definition, notch stresses are a concentration of stresses as a result of force deflections on notches and projections. According to the invention, the force deflection can be configured more "harmoniously", which is an important advantage of the invention. The stresses in the lamination are dominated by the radial stresses in the peripheral direction and these undergo a deflection in the region of the recess (slit 9). Through the ellipse 15 with its continuous distance increase, this force deflection takes place particularly harmoniously.

In Fig. 4 a partial view is illustrated of the second version of the geometry according to the invention of a rotor plate 6 of a rotor 1 for a HSM. Here, the rotor plate 6 is provided with recesses 9 as flux barriers, wherein a first group of the recesses 9 is configured, with respect to the diameter, as approximately radial slits, another group of the recesses 9, however, is configured as tangential slits (magnet pockets) with in each case a permanent magnet 30. In this version, mechanically highly stressed transition regions 13 of all recesses 9 are configured elliptically.

Between the adjacent recesses 9 in each case a cross-piece 32 is provided, the width of which is to be configured as narrow as possible for saturation purposes and is to withstand the centrifugal forces mechanically. As can be seen from Fig. 4, in this version the cross-pieces 32 have a parallel position to the pole axis 10. A centre line of the cross-piece 32 is designated in Fig.4 by reference number 34.

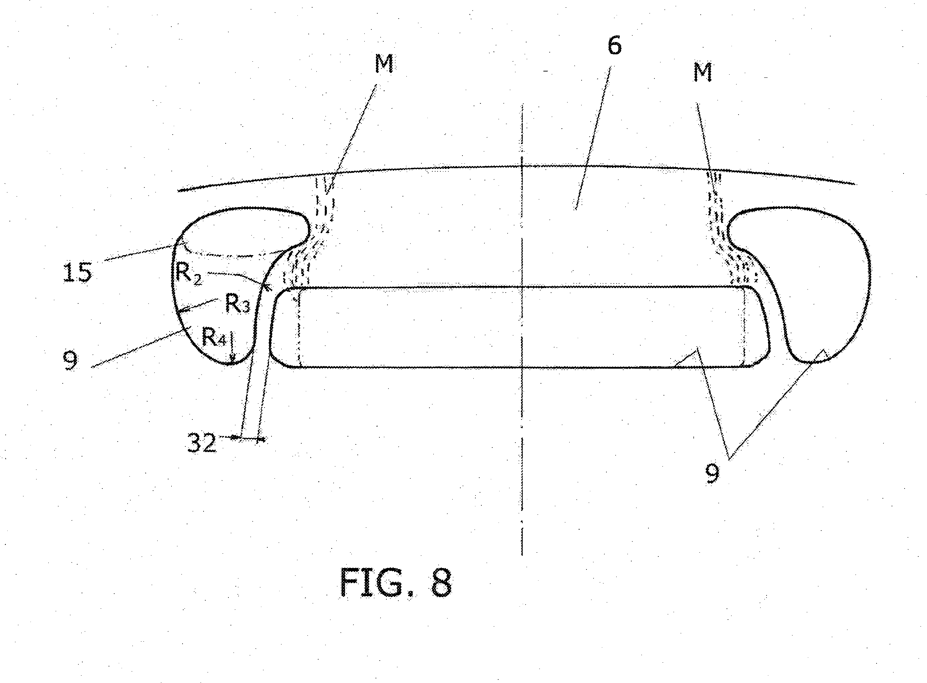

In Figures 5-8 a third and preferred version is illustrated of the geometry according to the invention of a rotor plate 6 of a rotor 1 for a HSM, wherein Fig. 5 is a complete view of the rotor plate 6, Fig. 6 a partial view VI in Fig. 5 on a proportionally enlarged scale, and Figures 7 and 8 is/are each a partial view in Fig. 6 on a proportionally likewise enlarged scale.

The plate geometry for the HSM according to Figures 5-8 differs from the version according to Fig. 4 substantially in that here the centre lines 34 of the cross-pieces 32 between the adjacent recesses 9 in the rotor plate 6 are configured obliquely to the pole axis 10, preferably at an angle 33 of approximately 10-50°, in particular 30°.

The reason for the inclination of the cross-pieces 32 according to the invention is as follows:
- At high rotation speeds, powerful centrifugal forces impinge and draw the cross-pieces 32 in the direction of the pole axis 10, because in radial direction of the pole axis, owing to the material accumulation by permanent magnets and the additional pole iron between the permanent magnets the greatest centrifugal forces occur in this direction; through the inclination according to the invention it is achieved that with the greatest stresses, the cross-pieces 32 are mostly stressed in longitudinal direction to tension and are stressed as minimally as possible to bending stress, in order to thus prevent signs of material fatigue in the cross-pieces 32 and hence to reduce the risk of fracture;
- The local notch effect at the force deflection sites is reduced by the use of the ellipses 15;
- The stresses in the cross-pieces 32 can be reduced continuously with an increasing inclination.
- Through the inclination of the cross-pieces 32, in connection with the improved embodiments of the transitions (ellipses), a symbiotic effect is produced, which reduces the notch effect still further.

Through the present invention therefore, through the oblique cross-pieces 32 and the special, in particular elliptical transitions of the recesses 9, a significant reduction of the mechanical stresses is achieved in the rotor plate 6.

Through this stress reduction, inter alia the following conclusions result:
- the oblique cross-pieces 32 can be configured distinctly narrower, which is connected with a saving on material with regard to magnet material and hence with a certain saving on weight, or
- the oblique cross-pieces 32 can be configured distinctly narrower and with an unchanging magnet mass the performance of the machine increases with regard to torque and output, or
- the security of the rotor 1 or respectively of the machine (with regard to the maximum rotation speed) can be distinctly increased.

Figure 8 illustrates a further partial view in Fig. 6, wherein the special ham- or kidney-like shape of the two radially outermost recesses 9 of the rotor plate 6 (alongside the smallest magnets) can be seen in a proportionally enlarged scale. All the curve shapes of all radially outwardly lying recesses 9 consist here of either a part of an ellipse 15 lying flat and approximately tangential to the periphery of the rotor (the full ellipse 15 is only illustrated in dot-and-dash lines in Fig. 8), or of at least two radii, running into each other, with different sizes, so that practically an ellipse is approximated. Therefore, e.g. to the right and left, two smaller radii could be used and in the centre - pointing radially outwards - one larger radius could be used.

In Fig. 8 it can also be seen that here a radius R2 or respectively R3 is connected in each case to the ellipse 15 on both sides, which radii are connected with each other by the lower radius R4. As has been described more extensively above, the cross-pieces 32 also alongside the smallest magnets 30 have a special oblique arrangement in this version, i.e. the centre line 34 of the cross-pieces 32 between the adjacent recesses 9 in the rotor plate 6 stands at an angle 33 obliquely to the pole axis 10, the value of which is approximately 10-50°, in particular 15-30°.

Through the curve shape according to the invention (ham- or kidney-like shape with elliptical end regions) of the recesses 9 (Fig. 8) - apart from the advantageous stress reduction against fracture - it is achieved that they form a "magnetic lens" (focussing lens on magnetic flux lines M), and they bundle or respectively deflect the magnetic flux lines M also from the radially outermost small magnet approximately in radial direction (Fig. 8). On the other hand, the oblique cross-piece shape reduces the extremely high notch stress, because the force deflection is reduced.

As a result, the HSM according to the invention with e.g. reduced magnet mass is lighter, more stable with regard to mechanical stress and has a greater torque, owing to the magnetic lens in the outer region. (The structure according to Fig. 4 is less preferred in this respect owing to these differences.)

It is also to be mentioned that at least the rotor plates 6 according to the present invention - if applicable, however, also the stator plates - are preferably constructed from an iron-cobalt alloy. Thereby, further increase in performance and insensitivity to temperature, and less lost heat of the electric motor can be achieved. With this alloy, preferably approximately 50% cobalt with approximately 50% iron can be alloyed.

With such a "cobalt plate", surprisingly even about 40% more torque is produced with otherwise identical machine design of a HSM (compared with a HSM with conventional iron plates). An ideal structure is therefore found especially for electric high performance racing engines. This measure is therefore also to be regarded as inventively significant.

If applicable, these iron-cobalt plates can also be configured permanent-magnetically, which achieves the effect that the magnetic fields produced by the permanent magnet (HSM) or by the electromagnet (CSM) lead to a magnetization of the rotor plate 6. This does not play an essential role in the HSM. In the CSM, on the other hand, this brings it about that also after the switching off (failure) of the exciting current, nevertheless a rotor magnetic field is present, which can be used for torque generation. In the stator, where the magnetic polarity changes, on the other hand, preferably no permanently magnetic plates come into use.

As mentioned, the measure according to the invention, the use and broadening of the ellipse to other laminations, and preferably to all transition regions of the recesses 9 is extremely important in practice. According to the invention the notch stresses in the rotor plate 6 in the HSM were even able to be reduced by 25%, which is likewise a surprising effect of the invention.

The laminations of electric motors are definitely very varied. In principle at least all transitions of the recesses 9 lying close to the shaft (close to the inner geometry) (transitions stressed with high stresses) can be configured in this manner according to the invention. This geometry could also even be used to reduce bending stresses.

It is also emphasized, that the systematic reduction of notch stresses preferably by ellipses in the transition regions 13 in the outer region, in addition to mechanical advantages also brings magnetic advantages, and therefore a somewhat increased efficiency, because thereby the magnetic short-circuits can be significantly reduced in the outer region. The above reduction of the magnetic short-circuit face (owing to the ellipses 15) in the outer region of the rotor 1 and hence an increase in the efficiency also belong to the overall aim of the increase in performance with, at the same time, an improved stability of the motor.

The rotor plate construction according to the invention, with the ellipses 15 at the transition regions 13, in combination with the oblique cross-pieces 32, makes possible significant reduction of the stresses in the sites which are at risk of fracture (i.e. at transitions of the cross-pieces 32 to the solid material of the rotor plate 6). Tests confirmed that through the proposed oblique cross-pieces 32, the cause of stress can be significantly mitigated and through the ellipse 15 the stress effect can be effectively reduced; that through both measures therefore symbiotically an improvement of the rotor is produced in terms of the objective.

Although the proposed rotor geometry is connected with a slightly increased production expenditure with regard to tools, the use of an ellipse or parabola in the transition regions 13 of the recesses is nevertheless categorically advisable in cases of application where high demands are made with regard to stability.

It is also to be noted that the proposed oblique cross-pieces 32 are relatively longer. Therefore, with an oblique cross-piece 32 the magnetic path is also somewhat longer and therefore its disrupting, flux-deviating effect is somewhat reduced. The proposed oblique cross-pieces 32 therefore offer a greater resistance to the magnetic field and in such a way also act more quickly in a saturated manner, i.e. "non-magnetically" for a further flux.

An even more important aspect, from a practical point of view, of the use of the proposed oblique cross-pieces 32 is seen in that the mechanical stresses decrease by 30% with the inclination, and thereby:
- the oblique cross-pieces 32 can be configured distinctly narrower, which is connected with a saving on material with regard to magnet material and hence with a certain saving on weight, or
- the oblique cross-pieces 32 can be configured distinctly narrower and with unchanging magnet mass the performance of the machine increases with regard to torque and output, or
- the security of the rotor or respectively of the machine (with regard to the maximum rotation speed) can be distinctly increased.

Through the use of the present invention and its subsequent analysis by means of the Finite Element Method with the ANSYS programme, based on the model of a 60° segment, which was also used for testing the cylinder press fit, it is found that the slit can be provided without disadvantage, and serves there to increase the reluctance moment - of the available torque in the absence of exciting current.

This characteristic is of crucial importance for the CSM for obtaining the emergency operating characteristics in the case of fault, and is to be preferred for an electric car equipped according to the invention. If, in addition, a permanent-magnetic rotor plate were to be selected, this effect is further intensified.

This flux barrier separates from each other the two magnetic flux lines, which run in opposite directions, and prevents too great a phase shift between the current axis and the field axis. Therefore, the torque which is produced can nevertheless be kept at the nominal torque without current supply of the rotor winding, which plays a very important role in electric cars without regard to functional security.

Through the invention, the entire rotor stack changes, and therefore the Hybrid Synchronous Motor (HSM) (and if applicable - according to the use of the invention - also the current-excited synchronous motor CSM). The invention therefore offers an improved lamination which handles the high forces in the rotor plate better than in the prior art, because due to the high centrifugal forces with high angular speeds - in particular at revolutions of about 12000 rpm - in operation the laminations are intensively stressed.

Further embodiments, variants of the present invention - and also combinations thereof - are also conceivable within the framework of the scope of protection according to the enclosed claims, to which however - in the knowledge of the present disclosure of the invention - an artisan in this art after receiving the teaching according to the invention needs no further technical information.

### LIST OF REFERENCE NUMBERS

1 - rotor
2 - rotor pole
3 - pole shank
4 - pole shoe
5 - exciter winding (cross-section)
6 - rotor plate
7 - hub
8 - central opening (joint diameter)
9 - recess/slit, or contour section
9A - first slit part
9B - second slit part
10 - pole axis
11 - side face/edges (recess/ slit 9)
12 - inner end (of slit or of first slit part 9A)
13 - transition region
14a,...,14g - distance from intersection of the main- and secondary axis
15 and 15' - curve of second or higher order, preferably ellipse
16 - main axis (of ellipse)
17 and 17'- secondary axis (of ellipse 15 or 15')
18 - width (of slit)
19 - bridge
20 - inner end (of second slit part 9B)
21 - outer end (of first slit part 9A)
22 - width (of bridge 19)
23 - length (of first slit part 9A)
24 - length (of second slit part 9B)
25 - outer end (of second slit part 9B)
26 - outermost point (of second slit part 9B)
27 - outer shell (contour section of rotor pole)
28 - radial distance
29 - radius
30 - permanent magnet
31 - distance
32 - cross-piece
33 - angle
34 - centre line (of cross-piece)
M - magnetic flux lines
O - intersection (of main and secondary axis of ellipse)
P - radially innermost point of recess/slit
R - rotor radius
R1 - radius (of second slit part 9B)
R2 - radius
R3 - radius
R4 - radius

## Claims

1. Laminated rotor for rotating electric machine, in particular for a hybrid synchronous motor of vehicle drives, the rotor plates (6) of which have one or several recesses (9) as flux barrier or magnet pocket, which comprise radially innermost and outermost edge sections as rounded transition regions (13) from and to edge sections lying therebetween, wherein at least one of these transition regions is configured in an ellipse shape, **characterized in that** each of the rounded transition regions (13) of the recesses (9) is shaped according to a part of the perimeter of an ellipse (15) and that between adjacent recesses (9) a cross-piece (32) is provided, the centre line (34) of all cross-pieces (32) lying obliquely to a pole axis (10).

2. Rotor according to claim 1, **characterized in that** the centre line (34) of the cross-piece (32) forms an angle (33) of 10 to 50° with the pole axis (10), preferably an angle of 30°.

3. Rotor according to claims 1 or 2, **characterized in that** a first group of the recesses (9) is configured, with respect to the diameter, as approximately radial slits, and another group of the recesses (9), is configured as tangential slits, provided with a permanent magnet (30).

4. Rotor according to claim 3, **characterized in that** the main axis of the ellipse is oriented essentially radially, at least in the tangential slits, preferably parallel to the center line (34) of the cross-piece (32), most preferably also for the radially inner edges of the approximately radial slits.

5. Rotor according to claim 3 or 4, **characterized in that** the main axis of the ellipse is oriented essentially tangentially for the radially outer edges of the approximately radial slits.

6. Rotor according to claim 5, **characterized in that** the radially outer edge of the first group of recesses (9) for an increased deflecting or respectively a concentration of magnetic flux lines (M) in radial direction is shaped with a ham- or kidney-like contour.

7. Laminated rotor for rotating electric machine, in particular for a hybrid synchronous motor of vehicle drives, the rotor plates (6) of which have one or several recesses (9) as flux barrier or magnet pocket, which comprise radially innermost and outermost edge sections as rounded transition regions (13) from and to edge sections lying therebetween, wherein at least one of these transition regions is configured in an ellipse shape, **characterized in that** the recesses (9) in the rotor poles (2) are configured as radial slits, wherein the inner edges of the recesses (9) are shaped according to a part of the perimeter of an ellipse (15) oriented tangentially and symmetrically to the centre line of the recesses (9), and that between two adjacent parts (9A, 9B) of the radial slits a bridge (19) is provided.

8. Rotor according to claim 7, **characterized in that** the main axis (16) of the tangential ellipse (15) is greater by 40 to 60% than the width (18) of the radial slit (9), and the secondary axis (17) of the ellipse (15) is smaller by 70 to 80% than the width (18) of the slit (9).

9. Rotor according to claim 7, **characterized in that** the radially inner first slit part (9A) is provided with a permanent magnet (30).

10. Rotor according to any of claims 7, **characterized in that** the radially outer second slit part (9B) is provided with a permanent magnet.

11. Rotor according to any of claims 7 to 10, **characterized in that** at least the radially inner end (12 or respectively 20) of both slit parts (9A, 9B) is configured elliptically.

12. Rotor according to claim 11, **characterized in that** additionally the radially outer end (21) of at least the first slit part (9A) is also configured elliptically.

13. Rotor according to any of claims 7 to 12, **characterized in that** an outermost point (26) of the radial slit (9) is arranged with a radial distance (28) from the outer shell (27) of the rotor pole (4), the value of which preferably lies between 0.6-0.7 mm.

14. Rotor according to any of claims 7 to 13, **characterized in that** in all recesses (9) and contour sections (27) of the rotor plate (6), the curves (15) of second order are configured elliptically in each transition region (13).

15. Rotor according to any of the preceding claims, **characterized in that** the rotor plates (6) are produced from an iron-cobalt alloy, preferably with a proportion of 50% cobalt and 50% iron.

## Patentansprüche

1. Laminierter Rotor für eine rotierende elektrische Maschine, insbesondere für einen Hybrid-Synchron-Motor in Fahrzeugantrieben, dessen Rotorplatten (6) eine oder mehrere Nuten (9) als Flussbarriere oder Magnettasche aufweisen, welche radial innerste und äußerte Kantenbereiche als gerundete Übergangsregionen (13) von und zu den Kantenbereichen, welche dazwischen liegen, umfassen, wobei wenigstens eine dieser Übergangsregionen in einer Ellipsenform konfiguriert ist, **dadurch gekennzeichnet, dass** jede der gerundeten Übergangsregionen (13) der Nuten (9) gemäß einem Teil des Umfangs einer Ellipse (15) geformt ist und dass zwischen benachbarten Nuten (9) ein Querstück (32) bereitgestellt ist, wobei die Mittellinie (34) aller Querstücke (32) schräg zu einer Polachse (10) liegt.

2. Rotor nach Anspruch 1, **dadurch gekennzeichnet, dass** die Mittellinie (34) der Querstücke (32) einen Winkel (33) von 10 bis 50°, vorzugsweise einen Winkel von 30°, mit der Polachse (10) bildet.

3. Rotor nach Anspruch 1 oder 2, **dadurch gekennzeichnet, dass** eine erste Gruppe der Nuten (9) in Bezug auf den Durchmesser als ungefähr radiale Schlitze konfiguriert ist und eine weitere Gruppe von Nuten (9) als tangentiale Schlitze, ausgestattet mit einem Permanentmagnet (30), konfiguriert ist.

4. Rotor nach Anspruch 3, **dadurch gekennzeichnet, dass** die Hauptachse der Ellipse im Wesentlichen radial ausgerichtet ist, wenigstens in den tangentialen Schlitzen, vorzugsweise parallel zur Mittellinie (34) des Querstücks (32), am besten auch für die radial inneren Kanten der ungefähr radialen Schlitze.

5. Rotor nach Anspruch 3 oder 4, **dadurch gekennzeichnet, dass** die Hauptachse der Ellipse im Wesentlichen tangential für die radial äußeren Kanten der ungefähr radialen Schlitze ausgerichtet ist.

6. Rotor nach Anspruch 5, **dadurch gekennzeichnet, dass** die radial äußere Kante der ersten Gruppe von Nuten (9) für eine vergrößerte Ablenkung oder beziehungsweise eine Konzentration der magnetischen Flusslinien (M) in radialer Richtung mit einer nierenähnlichen Kontur gestaltet ist.

7. Laminierter Rotor für eine rotierende elektrische Maschine, insbesondere für einen Hybrid-Synchron-Motor in Fahrzeugantrieben, dessen Rotorplatten (6) eine oder mehrere Nuten (9) als Flussbarriere oder Magnettasche aufweisen, welche radial innerste und äußerste Kantenbereiche als gerundete Übergangsregionen (13) von und zu den Kantenbereichen, welche dazwischen liegen, umfassen, wobei wenigstens eine dieser Übergangsregionen in einer Ellipsenform konfiguriert ist, **dadurch gekennzeichnet, dass** die Nuten (9) in den Rotorpolen (2) als radiale Schlitze konfiguriert sind, wobei die inneren Kanten der Nuten (9) gemäß einem Teil des Umfangs einer Ellipse (15), welche tangential und symmetrisch zur Mittellinie der Nuten (9) ausgerichtet ist, gestaltet sind und dass zwischen zwei benachbarten Teilen (9A, 9B) der radialen Schlitze eine Brücke (19) vorgesehen ist.

8. Rotor nach Anspruch 7, **dadurch gekennzeichnet, dass** die Hauptachse (16) der tangentialen Ellipse (15) um 40 bis 60% größer ist als die Breite (18) des radialen Schlitzes (9) und dass die sekundäre Achse (17) der Ellipse (15) um 70 bis 80% kürzer ist als die Breite (18) des Schlitzes (9).

9. Rotor nach Anspruch 7, **dadurch gekennzeichnet, dass** der radial innere erste Schlitzteil (9A) mit einem Permanentmagnet (30) vorgesehen ist.

10. Rotor nach Anspruch 7, **dadurch gekennzeichnet, dass** der radial äußere zweite Schlitzteil (9B) mit einem Permanentmagnet vorgesehen ist.

11. Rotor nach jedem beliebigen der Ansprüche 7 bis 10, **dadurch gekennzeichnet, dass** wenigstens das radial innere Ende (12 oder beziehungsweise 20) beider Schlitzteile (9A, 9B) elliptisch konfiguriert ist.

12. Rotor nach Anspruch 11, **dadurch gekennzeichnet, dass** zusätzlich das radial äußere Ende (21) von wenigstens dem ersten Schlitzteil (9A) auch elliptisch konfiguriert ist.

13. Rotor nach jedem beliebigen der Ansprüche 7 bis 12, **dadurch gekennzeichnet, dass** ein äußerster Punkt (26) des radialen Schlitzes (9) mit einem radialen Abstand (28) von der äußeren Schale (27) des Rotorpols (4) angeordnet ist, wobei dessen Wert vorzugsweise zwischen 0,6-0,7 mm liegt.

14. Rotor nach jedem beliebigen der Ansprüche 7 bis 13, **dadurch gekennzeichnet, dass** in allen Nuten (9) und Konturbereichen (27) der Rotorplatte (6) die Kurven (15) der zweiten Ordnung elliptisch in jeder Übergangsregion (13) konfiguriert sind.

15. Rotor nach jedem beliebigen der vorangehenden Ansprüche, **dadurch gekennzeichnet, dass** die Rotorplatten (6) aus einer Eisen-Kobalt-Legierung hergestellt sind, vorzugsweise in einem Verhältnis von 50% Kobalt und 50% Eisen.

## Revendications

1. Rotor feuilleté pour machine électrique rotative, en particulier pour un moteur synchrone hybride d'entraînements de véhicule, dont les plaques de rotor (6) ont un ou plusieurs évidements (9) en tant que barrière de flux ou poche d'aimant, comprenant des sections de bord radialement intérieure et extérieure sous forme de régions de transition arrondies (13) à partir et vers des sections de bord se trouvant entre elles, dans lequel au moins l'une de ces régions de transition est configurée en forme d'ellipse, **caractérisé en ce que** chacune des régions de transition arrondies (13) des évidements (9) est de forme conforme à une partie du périmètre d'une ellipse (15) et **en ce que**, entre des évidements adjacents (9), une traverse (32) est fournie, la ligne médiane (34) de toutes les traverses (32) étant oblique par rapport à un axe de pôle (10).

2. Rotor selon la revendication 1, **caractérisé en ce que** la ligne médiane (34) des traverses (32) forme un angle (33) de 10 à 50° par rapport à l'axe de pôle (10), de préférence un angle de 30°.

3. Rotor selon la revendication 1 ou 2, **caractérisé en ce qu'**un premier groupe d'évidements (9) est configuré, par rapport au diamètre, sous forme de fentes approximativement radiales, et un autre groupe d'évidements (9) est configuré sous forme de fentes tangentielles pourvues d'un aimant permanent (30).

4. Rotor selon la revendication 3, **caractérisé en ce que** l'axe principal de l'ellipse est orienté de manière essentiellement radiale, au moins dans les fentes tangentielles, de préférence parallèle à la ligne médiane (34) de la traverse (32), avec le plus de préférence également pour les bords radialement intérieurs des fentes approximativement radiales.

5. Rotor selon la revendication 3 ou 4, **caractérisé en ce que** l'axe principal de l'ellipse est orienté de manière essentiellement tangentielle pour les bords radialement extérieurs des fentes approximativement radiales.

6. Rotor selon la revendication 5, **caractérisé en ce que** le bord radialement extérieur du premier groupe d'évidements (9) pour un écartement accru ou respectivement une concentration des lignes de flux magnétique (M) dans une direction radiale a un contour en forme de haricot ou de jambon.

7. Rotor feuilleté pour machine électrique rotative, en particulier pour un moteur synchrone hybride d'entraînements de véhicule, dont les plaques de rotor (6) ont un ou plusieurs évidements (9) en tant que barrière de flux ou poche d'aimant, comprenant des sections de bord radialement intérieure et extérieure sous forme de régions de transition arrondies (13) à partir et vers des sections de bord se trouvant entre elles, dans lequel au moins l'une de ces régions de transition est configurée en forme d'ellipse, **caractérisé en ce que** les évidements (9) dans les pôles de rotor (2) sont configurés sous forme de fentes radiales, dans lequel les bords intérieurs des évidements (9) sont de forme conforme à une partie du périmètre d'une ellipse (15) orientée tangentiellement et symétriquement à la ligne médiane des évidements (9), et **en ce qu'**il est fourni un pont (19) entre deux parties adjacentes (9A, 9B) des fentes radiales.

8. Rotor selon la revendication 7, **caractérisé en ce que** l'axe principal (16) de l'ellipse tangentielle (15) est plus grand, de 40 à 60 %, que la largeur (18) de la fente radiale (9), et l'axe secondaire (17) de l'ellipse (15) est plus petit, de 70 à 80 %, que la largeur (18) de la fente (9).

9. Rotor selon la revendication 7, **caractérisé en ce que** la première partie de fente radialement intérieure (9A) est pourvue d'un aimant permanent (30).

10. Rotor selon la revendication 7, **caractérisé en ce que** la deuxième partie de fente radialement extérieure (9B) est pourvue d'un aimant permanent (30).

11. Rotor selon l'une quelconque des revendications 7 à 10, **caractérisé en ce qu'**au moins l'extrémité radialement intérieure (12 ou respectivement 20) des deux parties de fente (9A, 9B) est configurée de manière elliptique.

12. Rotor selon la revendication 11, **caractérisé en ce que** l'extrémité radialement extérieure (21) d'au moins la première partie de fente (9A) est également configurée de manière elliptique.

13. Rotor selon l'une quelconque des revendications 7 à 12, **caractérisé en ce qu'**un point extérieur (26) de la fente radiale (9) est agencé avec une distance radiale (28) à partir de la coque extérieure (27) du pôle de rotor (4) dont la valeur est de préférence entre 0,6 et 0,7 mm.

14. Rotor selon l'une quelconque des revendications 7 à 13, **caractérisé en ce que**, dans tous les évidements (9) et les sections de contour (27) de la plaque de rotor (6), les courbes (15) de deuxième ordre sont configurées de manière elliptique dans chaque région de transition (13).

15. Rotor selon l'une quelconque des revendications précédentes, **caractérisé en ce que** les plaques de rotor (6) sont produites dans un alliage de fer cobalt, de préférence avec une proportion de 50 % de cobalt et de 50 % de fer.
